# EUROPEAN PATENT APPLICATION

(11) **EP 1 610 326 A1**
(43) Date of publication of application: **28.12.2005**
(21) Application number: 05253026.8
(22) Date of filing: 18.05.2005
(51) Int. Cl.: G11B 27/034, G11B 27/34

(54) **Optical disk editing apparatus and method for the same**

(30) Priority: 21.06.2004 KR 2004046225
(71) Applicant: SAMSUNG ELECTRONICS CO., LTD., Suwon-si, Gyeonggi-do (KR)
(72) Inventor: Choi, Jeong-il, Yeongton-gu Suwon-si, Gyeonggi-do (KR)
(74) Representative: Brandon, Paul Laurence

(57) **Abstract**

Disclosed are an optical disk editing apparatus and a method for operating the same. A user input unit (170) requests an edition associated with a predetermined play list in at least one play list set in a user defined program chain information table of an optical disk (110a), and a control unit (180) allows a data file for storing actual data streams recorded on the optical disk (110a) to store only user data streams corresponding to the predetermined play list. Accordingly, only data streams corresponding to the play list are recorded on the optical disk.

## Description

The present invention relates to optical disk editing apparatus and methods for the same. More particularly, but not exclusively, the present invention relates to optical disk editing apparatus and methods for allowing only data streams corresponding to a play list to be recorded on the optical disk.

An optical disk editing apparatus is one that records data on the optical disk or reproduces data recorded on the optical disk. An example of an optical disk editing apparatus is a digital video disk player (DVDP). With recently developed technology, these optical disk editing apparatuses provide various functions for the user's convenience.

For example, the optical disk editing apparatus provides the function of deleting audio/video streams recorded on the optical disk, as well as the function of reproducing audio/video streams recorded on the optical disk. When deleting the audio/video streams recorded on the optical disk, the optical disk editing apparatus can delete only the section selected by the user from among all the audio/video streams that have been recorded onto the disk.

In a conventional optical disk editing apparatus, however, the user needs to manually select the section to be deleted by operating a user interface. In particular, when there exists a plurality of sections to be deleted, this burdens the user with repeatedly operating the user interface. In addition, when the user does not properly operate the user interface, the user can inadvertently delete one or more sections that should not have been deleted.

It is therefore one aim of preferred embodiments of the present invention to provide an optical disk editing apparatus and a method for operating the same that is capable of not deleting sections corresponding to a play list that are not supposed to be deleting, and deleting those sections that are supposed to be deleted in a simple manner among the data streams recorded on the optical disk.

According to one aspect of the present invention, there is provided an optical disk editing apparatus comprising an input unit for requesting an edition associated with a predetermined play list among at least one play list set in a user defined program chain information table of the optical disk, and a control unit for allowing only user data streams corresponding to the predetermined play list to be stored in a data file and for storing the actual data streams recorded on the optical disk when the edition is requested.

The control unit according to an embodiment of the present invention allows the data streams other than the user data streams to be deleted among the actual data streams stored in the data file, and allows only the user data streams to be stored when the edition is requested. In addition, the control unit identifies location information of each of one or more user cells constituting the predetermined play list, and allows only the user data streams corresponding to each of the user cells to be stored in the data file based on the identified location information.

The control unit in an exemplary embodiment of the present invention changes the location information of an original cell according to at least one original program information based on the location information of each of the user cells to thereby update management information for managing the data file, and allows only the user data streams to be stored in the data file based on the updated management information. The control unit updates the management information so as to allow an original program chain information table having the at least one original program information to have one original program information comprised of original cells in which the location information is changed. In this case, the identified location information is comprised of a start presentation time of each cell and an end presentation time of each cell.

In addition, the optical disk editing apparatus according to an embodiment of the present invention further comprises a signal processing unit for generating a screen to allow the predetermined play list to be selected from the at least one play list recorded on the optical disk. The control unit, when the edition is requested, detects the user defined program chain information table from the management file for managing the data file recorded on the optical disk, and controls the signal processing unit to allow the screen to be generated based on the user defined program chain information table.

According to other aspect of the present invention, there is provided an optical disk editing method that comprises requesting an edition associated with a predetermined play list among at least one play list set in a user defined program chain information table of the optical disk and allowing only user data streams corresponding to the predetermined play list to be stored in a data file storing actual data streams recorded on the optical disk when the edition is requested.

According to an exemplary embodiment of the present invention, the step of allowing only the user data streams to be stored comprises allowing the data streams other than the user data streams to be deleted from the actual data streams stored in the data file, and allowing only the user data streams to be stored when the edition is requested. The step of allowing only the user data streams to be stored comprises identifying location information of each user cell constituting the predetermined play list, and allowing only the user data streams corresponding to the user cell to be stored in the data file based on the identified location information.

In addition, the step of allowing only the user data streams to be stored according to an embodiment of the present invention comprises changing a location information of each original cell dependent on at least one original program information, based on the location information of each user cell, to update a management information for managing the data file, and allowing only the user data streams to be stored in the data file based on the updated management information.

The step of allowing only the user data streams to be stored comprises updating the management information so as to allow the original program chain information table having the at least one original program information to have one original program information comprised of original cells in which the location information is changed.

The present invention will be more apparent by describing certain embodiments of the present invention, by way of example only, with reference to the accompanying drawings, in which:
FIG. 1 is a schematic block diagram showing an optical disk editing apparatus in accordance with an embodiment of the present invention;
FIG. 2 illustrates a file structure of an optical disk in which data streams are recorded in a video recording (VR) format according to an embodiment of the present invention;
FIG. 3 is a diagram showing a portion of a management information file shown in FIG. 2;
FIG. 4A is a diagram for explaining a relationship between a play list and an ORG_PGCI table shown in FIG. 3;
FIG. 4B is a diagram showing a section corresponding to a predetermined play list remaining after an edition mode selection unit of FIG. 1 is selected; and
FIG. 5 is a flow chart illustrating a method for editing data recorded on the optical disk of FIG. 1.

Several embodiments of the present invention will now be described in detail with reference to the annexed drawings. In the drawings, the same or similar elements are denoted by the same reference numerals even though they are depicted in different drawings. In the following description, a detailed description of known functions and configurations incorporated herein have been omitted for conciseness and clarity.

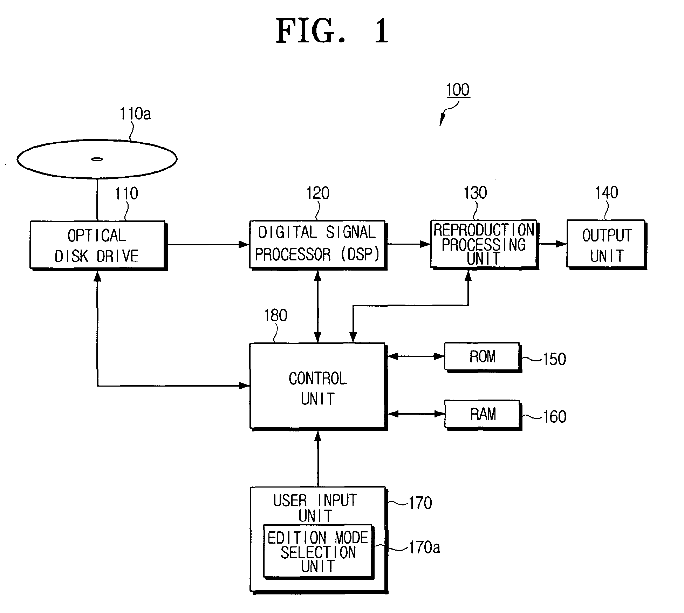

FIG. 1 is a schematic block diagram showing an optical disk editing apparatus in accordance with an exemplary embodiment of the present invention. Referring to FIG. 1, the optical disk editing apparatus 100 of this embodiment of the present invention comprises an optical disk drive 110, a digital signal processor (DSP) 120, a reproduction processing unit 130, an output unit 140, a ROM 150, a RAM 160, a user input unit 170, and a control unit 180.

The optical disk editing apparatus 100 is a recording and reproducing apparatus that processes data recorded on the optical disk 100a into reproducible signals that can be provided to an external display. The optical disk editing apparatus 100 according to an embodiment of the present invention can also record target data provided from an image source onto the optical disk 100a. Examples of the optical disk editing apparatus 100 include a digital video disk player (DVDP), a DVD recorder (DVDR), a digital video recorder (DVR), among others. Examples of the optical disk 100a include a DVD, a CD, a super audio CD (SACD), among others.

The optical disk drive 110 irradiates predetermined lights (typically a laser) onto the optical disk 100a when it is in a reproduction mode. The optical disk drive 110 also detects data streams recorded onto the optical disk 100a, and converts the detected data streams into radio frequency (RF) signals. The recorded data streams are audio/video data streams. In addition, the optical disk drive 110 irradiates predetermined lights onto the optical disk when it is in a recording mode to record or rewrite data streams.

The DSP 120 amplifies the RF signals and converts them to electrical signals, and digitizes the converted electrical signals. Thus, the DSP 120 digitizes the actual data streams included in the RF signals. The reproduction processing unit 130 converts signals output from the DSP 120 into reproduction signals capable of being used for hearing and viewing. For example, the reproduction processing unit 130 decodes data streams output from the DSP 120 to decompress previously compressed data.

Data streams output from the reproduction processing unit 130 are transported to an external display (not shown) through a transfer cable (not shown) and displayed on the external display. The transfer cable (not shown) is connected to the output terminal 140.

The ROM 150 stores a control program for controlling and managing the entire operation of the optical disk editing apparatus 100. In an embodiment of the present invention, a flash memory can be employed for the ROM 150. A codec program such as a DviX, as well as the control program can be stored in the ROM. The RAM 160 temporarily stores various data occurred while the optical disk editing apparatus 100 is operated.

The user input unit 170 is a user interface that outputs instructions for setting or performing functions supported by the optical disk editing apparatus 100 to the control unit 180. To this end, the user input unit 170 has a plurality of operating keys such as number keys, direction keys, and an enter key, among others.

According to an embodiment of the present invention, the user input unit 170 includes an edition mode selection unit 170A. The edition mode selection unit 170A outputs a signal for requesting an edition associated with a predetermined play list among at least one play list recorded on the optical disk 100a. To accomplish this, the user selects the predetermined play list among a plurality of play lists by means of the user input unit 170. The user can select the edition mode selection unit 170A to request the edition with sections that correspond to the selected play list be kept, and the remaining sections are deleted among all the data streams recorded on the optical disk 100a.

The play list is a reproduction order of programs recorded on the optical disk 100a. The play list can be re-edited by the user, wherein all or some of programs can be reproduced. The program is a logical unit of a recording content recognized by the user, and all data streams recorded on the optical disk 100a have at least one program. For example, one moving image is one audio/video program. Such a play list is set in a user defined program chain information table (UD_PGCIT) of a management information file of the optical disk 100a, and a plurality of the play lists can be set similarly.

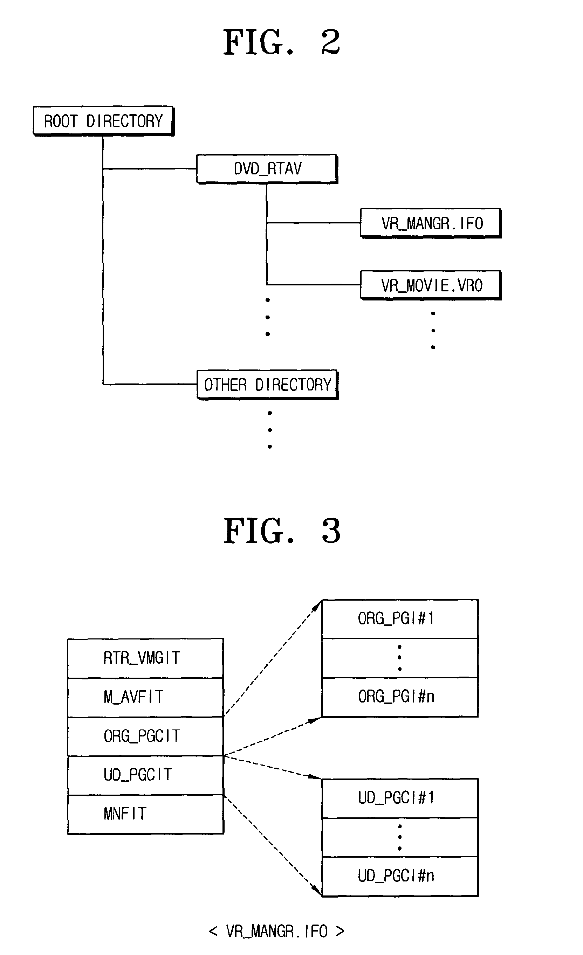

FIG. 2 illustrates a file structure of an optical disk in which data streams are recorded in a VR format, and of which the optical disk 100a manages by means of a universal disk format (UDF) file system. Referring to FIG. 2, a DVD-realtime audio/video (DVD_RTAV) directory is located under a root directory, and one DVD_RTAV directory has a management information file (VR_MANGR.IFO) and an actual data stream file (VR_MOVIE.VRO).

The VR_MANGR.IFO is one of several different types of file structures that can reside on the optical disk 100a, and the VR_MANGR.IFO manages all the data streams recorded on the optical disk 100a (i.e., all programs). To accomplish management of the data streams, navigation information is recorded on the VR-MANGR.IFO. The navigation information includes various information such as an original program chain information (ORG_PGCI), UD_PGCI, among other types of navigation information. Actual data streams are stored in the VR_MOVIE.VRO. Accordingly, the navigation information of a moving image program is recorded on the VR_MANGR.IFO, and AV streams constituting the moving image program are recorded on the VR_MOVIE.VRO. FIG. 3 is a diagram showing a portion of a management information file shown in FIG. 2. Referring to FIG. 3, the management information file includes an ORG_PGCI table (ORG_PGCIT), and a UD_PGCI table (UD_PGCIT).
The ORG_PGCIT has at least one original program information (ORG_PGI#1,..., ORG_PG#n, wherein n is a positive integer), and each program information (ORG_PGI#1,..., ORG_PGI#n) has at least one cell. Each cell has a location information describing where the cell is located in the actual data stream file. The location information has a start presentation time (PTM) and an end PTM.

In addition, the UD_PGCIT has at least one of UD_PGCI#1,..., UD_PGCI#n, and each program chain information of UD_PGCI#1,..., UD_PGCI#n has at least one cell. One UD_PGCI indicates one play list. When UD_PGCI#n are present in the UD_PGCIT, the control unit 180 determines that n play lists are set.

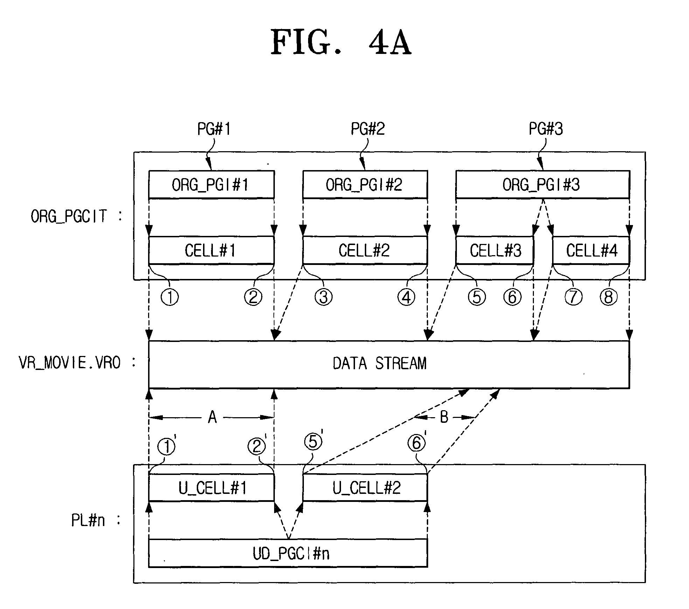

FIG. 4A is a diagram illustrating the relationship between a play list and the ORG_PGCIT shown in FIG. 3. Referring to FIG. 4A, the ORG_PGCIT has first to third program information (PGI_1 ~ PGI_3), so that three programs (PG#1, PG#2, PG#3) are recorded on the optical disk 100a. The first program information (ORG_PGI#1) has one cell (CELL#1), the second program information (ORG_PG#2) has one cell (CELL#2), and the third program information (ORG_PG#3) has two cells (CELL#3, CELL#4).

In this case, the CELL# 1 has a location information ① that is a start PTM and a location information ② that is an end PTM. CELL#2 has a location information ③ that is a start PTM and a location information ④ that is an end PTM. CELL#3 has a location information ⑤ that is a start PTM and a location information ⑥ that is an end PTM. CELL#4 has a location information ⑦ that is a start PTM and a location information ⑧ that is an end PTM. The PTM is actually indicated in a format such as '0X4AA3'. the nomenclature ① to ⑧ are employed for clarity of description. The actual data stream file (VR_MOVIE.VRO) has data streams that correspond to each cell (CELL#1 to CELL#4), namely, three programs corresponding to each cell (CELL#1 to CELL#4).

UD_PGCI#n is a predetermined play list (PL#n) among the plurality of play lists. When the user operates the user input unit 170 to select two sections in the actual data stream file (VR_MOVIE.VRO), the control unit 180 allows a first user cell (U_CELL#1) and a second user cell (U_CELL#2) corresponding to the selected sections (A, B) to be generated under the UD_PGCI#n. Referring to FIG. 4A, the selected two sections (A, B) are all of the first program (PG#1) and a portion of the third program (PG#3), respectively. In this case, the U_CELL#1 has a location information ①' that is a start PTM and a location information ②' that is an end PTM. The U_CELL#2 has a location information ⑤' that is a start PTM and a location information ⑥' that is an end PTM.

Referring to FIGS. 1 to 4A, the control unit 180 controls the entire operation of the optical disk editing apparatus 100 based on the signal generated from the user input unit 170 or a remote control (not shown) and the control program stored in the ROM 150. The optical disk editing apparatus 100 of this embodiment of the present invention edits data recorded on the optical disk 100a based on the signal selected by the user. To accomplish this, the control unit 180 detects the management information file (VR_MANGRO.IFO) of the program recorded on the optical disk 100a when the optical disk 100a is loaded, and allows the management information file to be temporarily stored in the RAM 160.

When a request for displaying a menu screen in which a plurality of play lists are displayed is received from the user input unit 170, the control unit 180 controls the reproduction processing unit 130 to have the menu screen displayed. The reproduction processing unit 130 generates the menu screen allowing the user to select a predetermined play list (PL#n) based on the UD_PGCIT of the management information file stored in the RAM 160, and outputs the menu screen to an external display (not shown).

When the edition mode selection unit 170A is selected after the predetermined play list (PL#n) is selected by the user input unit 170 in the menu screen displayed on the external display (e.g., a TV), the control unit 180 edits the management information file so as to have the actual data stream file recorded on the optical disk 100a store only the user data stream.

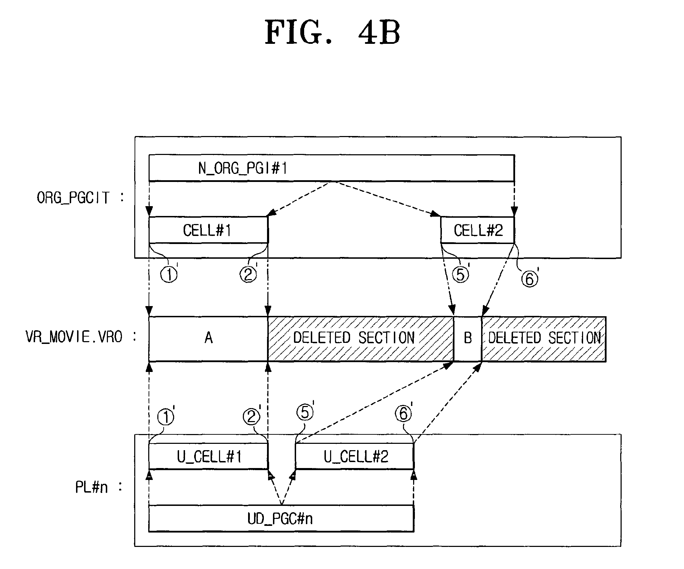

The actual data stream corresponding to at least one ORG_PGI is stored in the data stream file, and the user data stream represents one that corresponds to the play list (PL#n) selected by the user input unit 170. In FIG. 4A, the user data stream corresponds to the A and B sections in the actual data stream. Accordingly, when the edition mode selection unit 170A is selected, the control unit 180 edits the management information file so as to delete the rest data streams other than the above-described user data stream in the actual data streams stored in the data stream file as shown in FIG. 4B. Therefore, when the edition mode selection unit 170A is selected, the control unit 180 edits the management information file so as to keep the sections corresponding to the selected play list (PL#n) and delete the remaining sections in the data streams recorded on the optical disk 100a.

Referring to FIG. 4B, when the edition mode selection unit 170A is selected, the control unit 180 identifies the location information (①', ②', ⑤', ⑥') of each cell (U_CELL#1, U_CELL#2) constituting the selected play list (PL#n). The control unit 180 changes the location information of each cell (CELL#1 to CELL#4) constituting the ORG_PGI based on the identified location information (①', ②', ⑤', ⑥'). Referring to FIG. 4B, the location information of the CELL#1 remains as ① and ② (or ①' and ②'), but the location information for CELL#2 has changed to ⑤' and ⑥', and that CELL#2 and CELL#4 are deleted.

In addition, the control unit 180 edits the management information file so as to allow the ORG_PGCIT of the management information file to have only a new ORG_PGI#1 (N_ORG_PGI#1). As such, the location information of cells (CELL# 1 to CELL#4) constituting the ORG_PGI stored in the management information file is updated with the location information of the cells (CELL#1 and CELL#3) corresponding to the selected play list (PL#n; which is the above-described user data stream), and only the user data stream is stored in the data stream file.

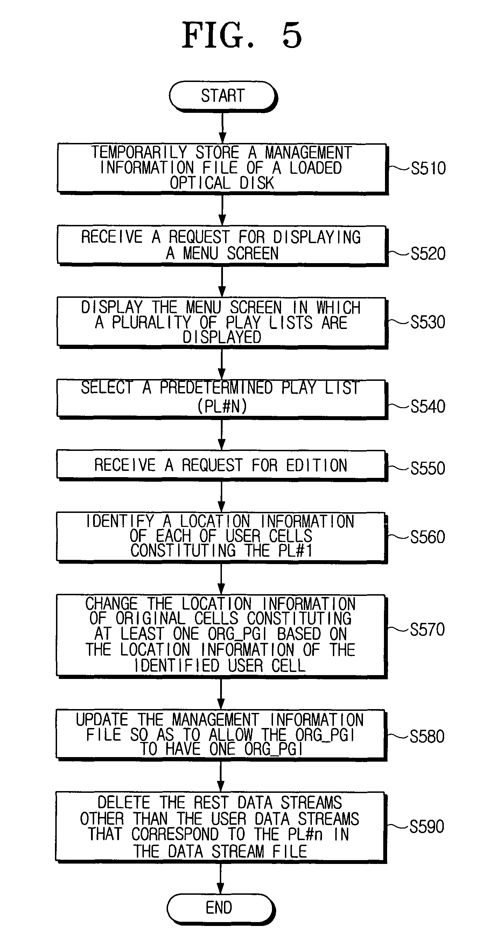

FIG. 5 is a flow chart explaining the method for editing data recorded on the optical disk of FIG. 1. Referring to FIGS. 1 to 5, the control unit 180 detects the management information file (VR_MANGR.IFO) of the program recorded in the loaded optical disk 100a, and allows them to be temporarily stored in the RAM 160 (step S510). After the step S510 is carried out, the control unit 180 controls the reproduction processing unit 130 to generate the menu screen when a request for displaying the menu screen is received from the user input unit 170 (steps S520, S530). The menu screen generated by the reproduction processing unit 130 is displayed on an external display.

When the signal for requesting the edition is received after the predetermined play list (PL#n) is selected in the displayed menu screen (steps S540, S550), the control unit 180 identifies the location information (①', ②', ⑤', ⑥') of each cell (U_CELL#1, U_CELL#2) constituting the selected play list (PL#n) (step S560). The control unit 180 changes the location information of each original cell (CELL#1 to CELL#4) based on the identified location information (①', ②', ⑤', ⑥') (step S570). Referring to FIG. 4B, the location information of the CELL#1 remains as ① and ②, but the location information of the CELL#3 has changed to ⑤' and ⑥', and the location information of CELL#2 and CELL#14 are deleted. The original cells (CELL#1 to CELL#4) are cells dependent on the first to third program information (ORG_PGI#1, ORG_PGI#2, ORG_PGI#3).

After step S570 has been carried out, the control unit 180 edits and updates the management information file so as to allow the ORG_PGCIT to have only one ORG_PGI (step S580). In an embodiment of the present invention, the ORG_PGI updated by the edition of the management information file is referred to as an N_ORG_PGI for purposes of clarity. Referring to FIG. 4B, the edited ORG_PGCIT has one N_ORG_PGI, which has two cells (CELL#1 and CELL#2).

The control unit 180 controls the driving of the optical disk drive 110 so as to allow the user data stream (comprised of sections A and B) corresponding to the selected play list (PL#n) in the data stream file to be kept (i.e., not deleted) and the remaining sections (which are shown as oblique lines) to be deleted based on the edited management information file (step S590).

As discussed above, the optical disk editing apparatus and method for using the same according to an embodiment of the present invention, only data streams corresponding to the play list can be edited to be recorded on the optical disk. When the edition mode is selected after the user operates the user interface to select a predetermined play list, the method according to an embodiment of the present invention updates the ORG_PGCI information so as to allow the sections corresponding to the selected play list in the management information file to be comprised of one PGI and cells dependent on the PGI. As a result, only data streams corresponding to the selected play list in the data streams recorded on the optical disk are stored and the remaining data streams are deleted.

The foregoing embodiment and advantages are merely exemplary and are not to be construed as limiting the present invention. The present teaching can be readily applied to other types of apparatuses. Also, the description of the embodiments of the present invention is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An optical disk editing apparatus (100), comprising:
an input unit (170) for requesting an edition associated with a predetermined play list in at least one play list set in a user defined program chain information table of an optical disk (110a); and
a control unit (180) for allowing only user data streams corresponding to the predetermined play list to be stored in a data file storing actual data streams recorded on the optical disk (110a) when the edition is requested.

2. The apparatus (100) as recited in claim 1, wherein the control unit (180) allows the data streams other than the user data streams to be deleted among the actual data streams stored in the data file, and allows only the user data streams to be stored when the edition is requested.

3. The apparatus (100) as recited in claim 1 or claim 2, wherein the control unit (180) identifies a location information of each of user cells constituting the predetermined play list, and allows only the user data streams corresponding to each of the user cells to be stored in the data file based on the identified location information.

4. The apparatus (100) as recited in claim 3, wherein the control unit (180) changes the location information of an original cell dependent on at least one original program information based on the location information of each of the user cells to update a management information for managing the data file, and allows only the user data streams to be stored in the data file based on the updated management information.

5. The apparatus (100) as recited in claim 4, wherein the control unit (180) updates the management information so as to allow an original program chain information table having the at least one original program information to have one original program information comprised of original cells in which the location information is changed.

6. The apparatus (100) as recited in any of claims 3-5, wherein the identified location information is comprised of a start presentation time of each cell and an end presentation time of each cell.

7. The apparatus (100) as recited in any preceding claim, further comprising:
a signal processing unit (120) for generating a screen to allow the predetermined play list to be selected in the at least one play list recorded on the optical disk,
wherein the control unit (180), when the edition is requested, detects the user defined program chain information table from the management file for managing the data file recorded on the optical disk (110a), and controls the signal processing unit to allow the screen to be generated based on the user defined program chain information table.

8. An optical disk editing method, comprising:
requesting an edition associated with a predetermined play list in at least one play list set in a user defined program chain information table of an optical disk (110a); and
allowing only user data streams corresponding to the predetermined play list to be stored in a data file storing actual data streams recorded on the optical disk when the edition is requested.

9. The method as recited in claim 8, wherein the step of allowing only the user data streams to be stored comprises:
allowing the rest data streams other than the user data streams to be deleted among the actual data streams stored in the data file; and
allowing only the user data streams to be stored when the edition is requested.

10. The method as recited in claim 9, wherein the step of allowing only the user data streams to be stored when the edition is requested comprises:
identifying a location information of each of user cells constituting the predetermined play list; and
allowing only the user data streams corresponding to the user cells to be stored in the data file based on the identified location information.

11. The method as recited in claim 10, wherein the step of allowing only the user data streams corresponding to the user cells to be stored in the data file based on the identified location information comprises:
changing a location information of each of original cells dependent on at least one original program information based on the location information of each of the user cells to update a management information for managing the data file; and
allowing only the user data streams to be stored in the data file based on the updated management information.

12. The method as recited in claim 11, wherein the step of allowing only the user data streams to be stored in the data file based on the updated management information comprises:
updating the management information so as to allow the original program chain information table having the at least one original program information to have one original program information comprised of original cells in which the location information is changed.

13. The method as recited in any one of claims 10-12, wherein the identified location information is comprised of a start presentation time of each cell and an end presentation time of each cell.
